# EUROPEAN PATENT SPECIFICATION

(11) **EP 0 846 583 B1**
(45) Date of publication and mention of the grant of the patent: **06.04.2005**
(21) Application number: 97928489.0
(22) Date of filing: 27.06.1997
(51) Int. Cl.: B60J 5/00, B60R 21/04, B60R 13/02

(54) **DOOR TRIM STRUCTURE AND METHOD OF FORMING SAME**
VERKLEIDUNGSSTRUKTUR FÜR TÜREN UND VERFAHREN ZU DEREN HERSTELLUNG
STRUCTURE DE GARNISSAGE DE PORTIERE ET SON PROCEDE DE FORMATION

(30) Priority: 27.06.1996 JP 16704196
(43) Date of publication of application: 10.06.1998
(73) Proprietor: MITSUBISHI JIDOSHA KOGYO KABUSHIKI KAISHA, Tokyo (JP)
(72) Inventor: TAKEUCHI, Koichi, Minato-ku, Tokyo 108 (JP)
(74) Representative: Strehl Schübel-Hopf & Partner
(86) International application number: PCT/JP1997/002225
(87) International publication number: WO 1997/049569

(56) References cited:
- JP-A- 1 288 417
- JP-A- 1 301 217
- JP-A- 8 164 739
- JP-A- 54 004 957
- JP-A- 58 177 333
- JP-U- 3 124 912
- JP-U- 5 041 916

## Description

### Technical Field

This invention relates to a structure of a door trim having a function for relaxing an impact due to a side collision, and to a molding method of the door trim structure.

### Background Technology

Room inside of a door of a vehicle is provided with a door trim as a lining, on which an armrest 2, a door pocket 3, and the like are formed. On the other hand, recently various types of air bags for side impact have been developed for preparing for side collision. Since, however, against the side impact, if the impact energy can be absorbed by the door to some extent, the air bag for side impact becomes even further effective. Therefore, a vehicle door having a shock absorption function against a side impact has heretofore been investigated.

When providing the vehicle door with a shock absorption function, a shock absorption material such as a resin, polyurethane, or the like is provided on the door panel. Since it is advantageous in view of the space when the shock absorption material is provided on the backside of the door trim, various types of door trims integrally provided with a shock absorption material have heretofore been proposed (e.g., Japanese Utility Model Laid-open Publication No. 6-78035, and the like).

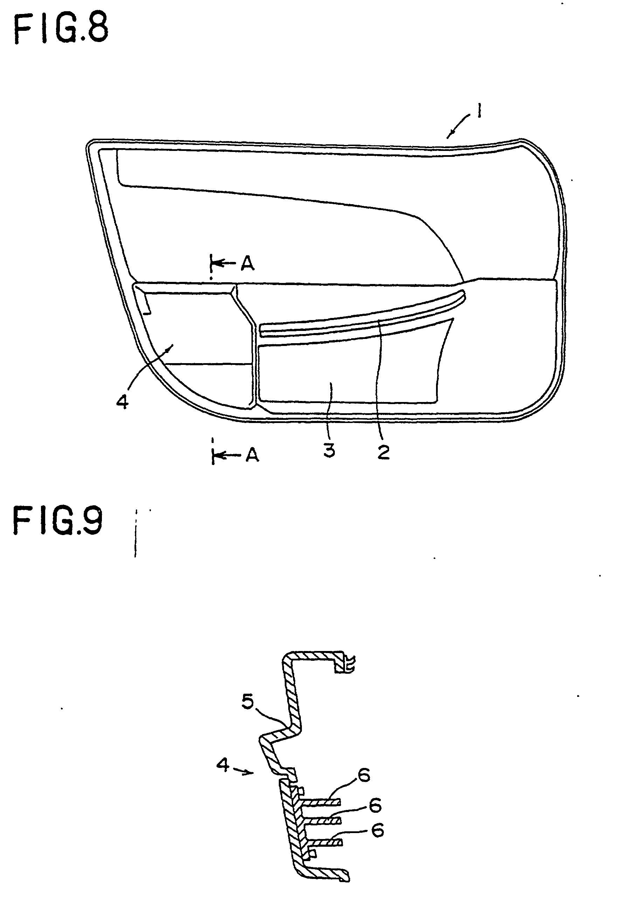

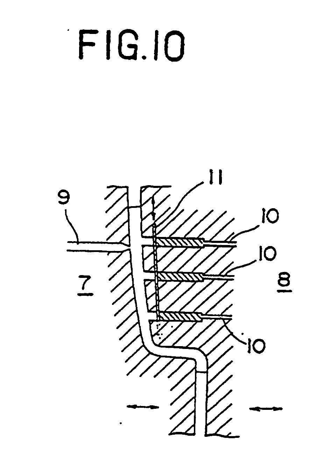

An example of door panel integrally provided with a shock absorption material on the backside of the trim will be described with reference to Figs. 8 and 9. Fig. 8 is a schematic front view showing a door panel provided with a prior art door trim on the backside, and Fig. 9 is a sectional view taken along line A-A in Fig. 8.

As shown in Fig. 8, a door panel 1 is provided with a door trim 4, on which an armrest, a door pocket, and the like are formed. As shown in Fig. 9, ribs 6 having a shock absorption function are mounted on the backside (opposite to the vehicle room) of a main body 5 of the door trim 4. The main body 5 is formed of a resin which is good in appearance after molding and superior in moldability, and the ribs 6 are formed of a resin of characteristics which can stably absorb a deformation energy at the time a side collision occurs. Since the main body 5 of the door trim 4 and the ribs 6 are made of resins of different properties, they are separately formed and then the ribs 6 are mounted to the main body 5 by welding or the like.

In the above-described door panel 1 provided with the door trim 4, when an impact is applied from the side due to a side collision or the like, the ribs 6 deform to absorb the impact energy, thus relaxing the impact applied to the door panel 1. This maximizes the effect of a side impact air bag or the like. The main body 5 is formed of a resin which is superior in moldability, and the ribs 6 are formed of a resin having characteristics that can absorb the deformation energy. Since characteristics of these resins are different from each other, the main body and the ribs 6 cannot be molded integrally, and the ribs 6 are mounted to the main body 5 after separate molding. Therefore, the manufacture of the door trim 4 requires a tedious work.

To integrally molding the main body 5 and the impact absorption ribs 6, it is considered that a parting plate is provided at the boundary of the main body 5 and the ribs 6. Integral molding of the main body 5 and the ribs 6 will be described with reference to Fig. 10.

As shown in the Figure, the door trim 4 having the main body 6 and the ribs 6 integrally provided is molded by molding dies 7 and 8. The molding die 7 is provided with a gate for feeding a resin material of the main body 5, and the molding die 8 is provided with gates 10 for feeding a resin material of the ribs 6 corresponding to the number of ribs. Further, the molding die 8 is provided with a parting plate 11 movably in the vertical direction corresponding to the root part of the ribs 6.

When molding the door trim 4 in the above arrangement, the molding dies 7 and 8 are set in predetermined positions, and the parting plate 11 is set in a position corresponding to the root part of the ribs 6. In this condition, the resin which is superior in appearance after molding is fed from the gate 9 of the molding die 7. Then, the parting plate 11 is moved upward to remove the parting plate 11 from the position of the ribs 6, and the resin of characteristics that can absorb the deformation energy is fed from the gate 10 of the molding die 8. By moving the molding dies 7 and 8 in the right and left directions in the Figure and removing the door trim from the molding dies 7 and 8, the door trim 4 is molded having the main body 5 and the ribs 6 integrally molded from resins differing in characteristics.

Using this method, the process for separately molding and then fixing the main body 5 and the ribs 6 can be decreased, thereby reducing management cost of the parts and labor. Therefore, it is possible to obtain the door trim 4 at a low cost.

However, when the door trim 4 is molded as shown in Fig. 10, unless the parting is made exactly, relative positional relations of the main body 5 and the ribs 6 are not as predetermined. If the relative positional relations of the main body 5 and the ribs 6 of the door trim 4 change, there is a fear that an adverse effect is exerted on the appearance of the main body 5, and the length of the ribs 6 is deviated, impairing stable absorption of impact energy.

Further, in the molding example shown in Fig. 10, it is necessary to provide a plurality of gates 10 in the molding die 8 according to the number of the ribs 6. Still further, the parting plate 11 is moved upward in the Figure, however, since the moving direction of the parting plate 11 is perpendicular to the moving directions of the molding dies 7 and 8, a complex moving mechanism is required. Yet further, the moving amount of the parting plate 11 is required to be sufficient to release the ribs 6, and an elaborate moving mechanism is required.

A door trim structure which has the features included in the first part of claim 1 is known from JP 08 164739 A. There, the main body of the structure and the accessory part are molded from the same resin, and shock absorbing ribs formed on the accessory part cooperate with yet another structural part of the door.

### Disclosure of the Invention

With a view to eliminate the above prior art problems, a primary object of the present invention is to provide a door trim structure and a molding method which can mold the door trim without an elaborate mechanism and maintain relative positional relations of the main body and the accessory part made of resins of different types always in a predetermined condition.

The present invention meets this object by a door trim structure as defined in claim 1. With this structure, it is possible to integrally mold the main body and the accessory part from different resins while maintaining their relative positional relations always in a predetermined condition, and characteristics of the resin of the accessory part do not affect the main body.

The accessory part, which according to an embodiment is formed by ribs contacting against the main body, serves as a shock absorption member at the time of side collision, and a door trim having a shock absorption function against a side impact can be obtained without increasing the man-hour and fabrication cost and mounting space.

In accordance with the method set forth in claim 4, the door trim can be molded without using a complex mechanism.

The resins for forming the main body and the accessory part constituting the door trim can be, for example, a PPF (a resin comprising a hardening component such as glass, carbon, fiber powder, or the like, and a component for improving the appearance such as rubber). As the first resin material of the main body to be the vehicle room side of the door trim can be PPF with a decreased amount of the hardening component and an increased amount of appearance improving component, and the second resin material of the accessory part to be the shock absorption part at the backside of the door trim can be PPF with a decreased amount of the appearance improving component and an increased amount of hardening component.

### Brief Description of the Drawings

Fig. 1 is a schematic sectional view showing the assembled state of the door trim structure according to an embodiment of the present invention;
Fig. 2 is a schematic sectional view showing the molded state of the door trim structure according to an embodiment of the present invention;
Figs. 3 to 7 are schematic views for explaining the molding procedure of a door trim 21;
Fig. 8 is a schematic front view showing a door panel provided with a prior art door trim at the backside;
Fig. 9 is a schematic sectional view taken along line A-A in Fig. 8;
Fig. 10 is a schematic view for explaining a prior art molding condition.

### Best Mode for Practicing the Invention

Embodiments of the present invention will be described with reference to the drawings.

Unless specifically described, the materials, shapes, and relative positional relations of components disposed in the embodiment are given by way of illustration only, and thus are not intended to be limitative of the scope of the present invention.

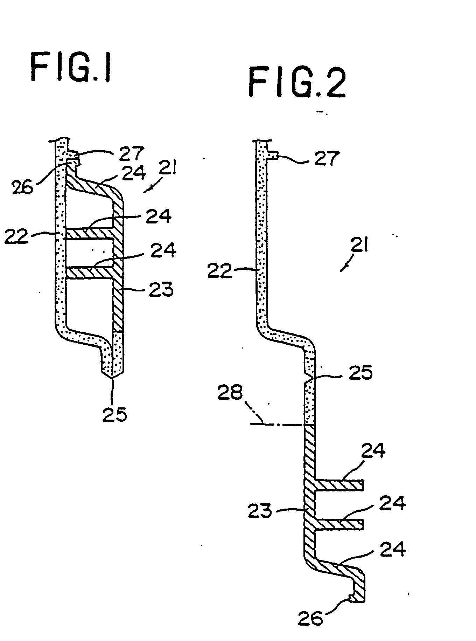

Fig. 1 is a schematic sectional view showing the assembled state of the door trim structure according to an embodiment of the present invention, and Fig. 2 is a schematic sectional view showing the molded state of the door trim structure according to an embodiment of the present invention.

As shown in Fig. 1, a door trim 21 attached to a door panel (not shown) comprises a main body 22 constituting the surface of the door trim 21 and an accessory part 23 constituting the back surface of the door trim 21. The accessory part 23 is provided with ribs 24 as a shock absorption part disposed in the horizontal direction and, as shown in Fig. 2, the main body 22 and the accessory part 23 are integrally molded through a hinge part 25 having a flexible lower end.

As shown in Fig. 1, the accessory part 23, after being integrally molded with the main body 22, is bent from the hinge part 25 to the side constituting the back surface of the door trim 21, the part to be the upper end (the other end) is engaged with a protrusion 27 as an engaging member with the main body 22 through a claw 26 as an engaging member. That is, when the accessory part 23 is bent, the upper surface of the claw 26 engages with the lower surface of the protrusion 27 of the main body 22, resulting in a state where the claw 26 engages with the protrusion 27, and the other end of the accessory part 23 is engaged with the main body 22. Engagement of the other end of the accessory part 23 with the main body 22 is also possible using another engaging member.

The parting position 28 as the boundary of the resin of the main body 22 and the resin of the accessory part 23 is disposed at a position shifted to the accessory part 23 side from the hinge part 25.

As the resin of the main body 22 and the accessory part 25 including the ribs 24 constituting the door trim 21, PPF (a resin mixed with a hardening component such as glass, carbon, fiber powder or the like and an appearance improving component such as rubber) is used. The main body 22 to be the vehicle room side of the door trim 21 uses PPF with reduced amount of the hardening component and increased amount of the appearance improving component, thereby improving the appearance after molding. The accessory part 23 to be the shock absorption part at the backside of the door trim 21 uses PPF with reduced amount of the appearance improving component and increased amount of the hardening component, thereby obtaining the desired shock absorption characteristics.

By providing the parting position 28 of the resin of the main body 22 and the resin of the accessory part 23 at a position shifted to the accessory part 23 side, the main body 22 will never be affected by characteristics of the resin of the accessory part 23. Further, since the ribs 24 of the accessory part 23 are of a shape of a position not relating to the parting position 28, they are always molded in the same shape, thereby obtaining stable shock absorption characteristics with no dispersion.

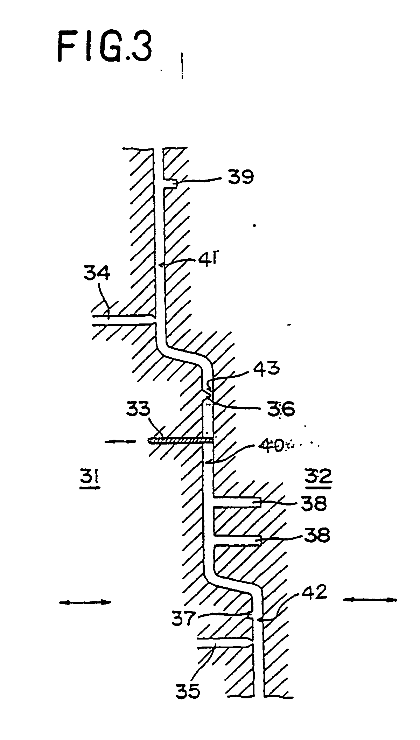

Molding procedure of the door trim 21, that is, an embodiment of the molding method of the door trim structure according to the present invention, will be described with reference to Figs. 3 to 7.

A molding chamber 40 is formed between a pair of molding dies 31 and 32, and the molding chamber 40 is charged with a resin to mold the door trim 21 shown in Figs. 1 and 2.

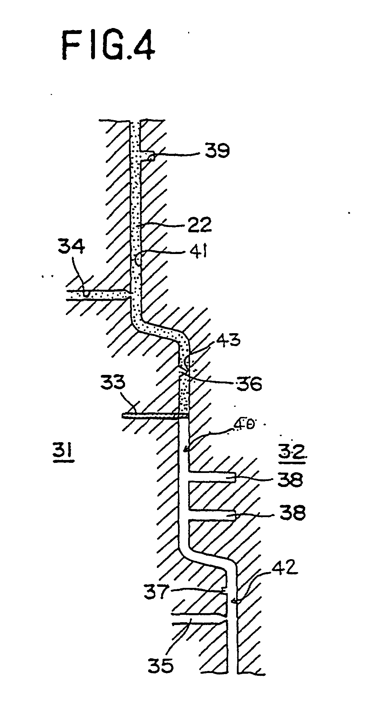

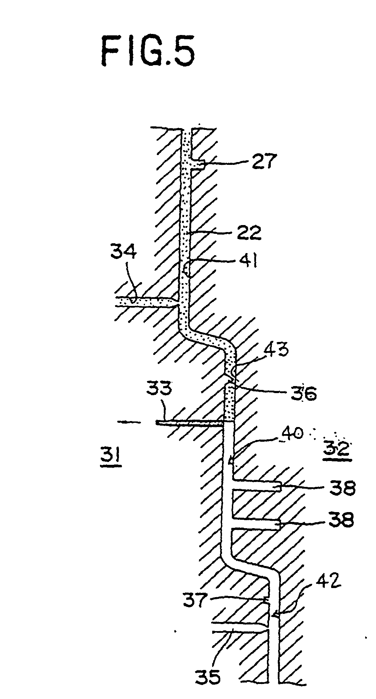

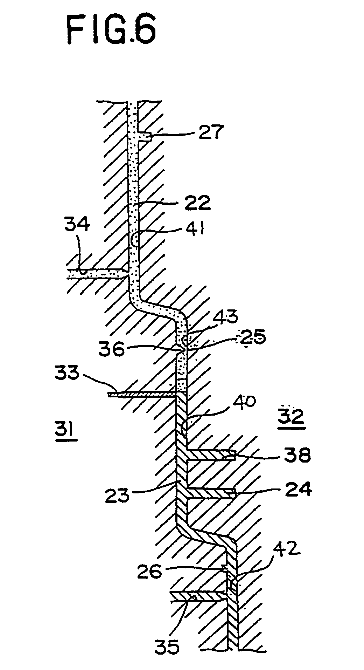

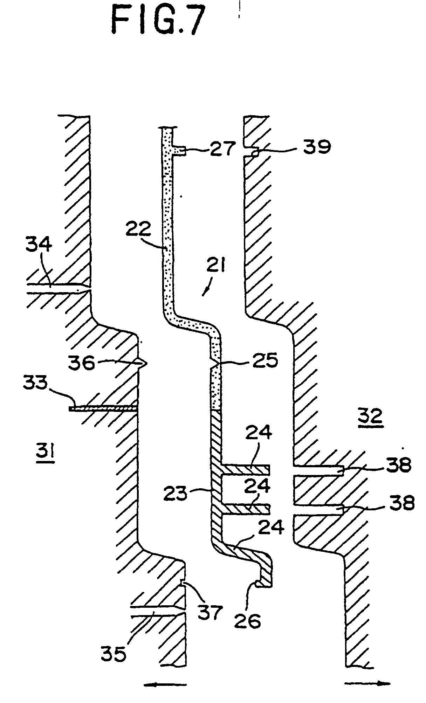

Fig. 3 shows a condition in which the molding dies 31 and 32 are set in predetermined positions, and a parting plate 33 is set in a predetermined position to partition the molding chamber 40 into a main body molding chamber 41 and an accessory part molding chamber 42, Fig. 4 shows a condition in which a resin of the main body is injected, Fig. 5 shows a condition when the parting plate 33 is removed, Fig. 6 shows a condition in which a resin of the accessory part 23 is injected, and Fig. 7 shows a condition in which the molding dies 31 and 32 are separated to complete molding the door trim 21.

As shown in Fig. 3, the molding die 31 at one side is provided with a gate 34 as a first gate for injecting a resin of the main body 22 as a first resin material and a gate 35 as a second gate for injecting a resin of the accessory part 23 as a second resin material. Further, a protrusion 36 for forming a hinge part 25 in the main body 22 is provided below the gate 34 of the molding die 31 to form a narrow passage part 43, and a recess 37 for forming the claw 26 of the accessory part 23 is provided above the gate 35 of the molding die 31. The molding dies 31 and 32 are movable in the right and left directions in the figure by moving means (not shown), so that the molding dies 31 and 32 move in close to and apart from each other.

On the other hand, as shown in Fig. 3, the molding die 32 of the other side is provided with two recesses 38 for forming ribs 24 of the accessory part 23, located at positions between the protrusion 36 and the recess 37. Further, a recess 39 for forming a protrusion 27 of the main body 22 is provided at an upper part of the molding die 32.

Still further, a parting plate 33 is movably provided at a position of the molding die 31 between the protrusion 36 of the molding die 31 and the recesses 38 of the molding die 32, and the parting plate 33 is moved by drive means (not shown) in the same direction as the moving direction of the molding die 31 to contact against the surface above the recess 38 of the molding die 32.

In this condition, as shown in Fig. 4, while injecting the resin of the main body 22 from the gate 34 of the molding die 31, the main body 22 is molded between the molding dies 31 and 32 up to the upper surface of the parting plate 33. That is, one part of the molding chamber 40 is injected with the resin of the main body 22 to mold the main body 22.

After molding mainly the main body 22, as shown in Fig. 5, the parting plate 33 is moved to the extent of the width of the door trim 21 to the left side in the figure. After the parting plate 33 is moved, as shown in Fig. 6, the resin of the accessory part 23 is injected from the gate 35 of the molding die 32, to integrate the accessory part 23 with the main body 22 at the lower end of the main body 22. That is, the other part of the molding chamber 40 for molding the accessory part 23 provided with the ribs 24 is injected with the resin of the accessory part 23.

In this condition, as shown in Fig. 7, when the molding dies 31 and 32 are separated along with the parting plate 33, molding of the door trim 21 is completed in which the main body 22 and the accessory part 23 of different resins are integrated.

At this moment, the main body 22 of the door trim 21 is provided with the protrusion 27 formed by the recess 39 of the molding die 32 and the hinge part 25 formed by the protrusion of the molding die 31. Further, the accessory part 23 of the door trim 21 is provided with the ribs 24 formed by the recesses 38 of the molding die 32 and the claw 26 formed by the recess 37 of the molding die 31.

The thus integrally molded door trim 21 is folded at the hinge part 25 so that the upper surface of the claw 26 of the accessory part 23 is engaged with lower surface of the protrusion 27 of the main body 22 and the other end of the accessory part 23 is engaged with the main body 22. This completes the door trim 21 in which the accessory part 23 having ribs 24 to be the shock absorption part at the time of a side collision is disposed on the backside (backside of the door trim 21) of the main body 22 (condition shown in Fig. 1).

In the above-described door trim 21, the main body 22 comprising a resin superior in appearance characteristics and to be the vehicle room inside and the accessory part 23 having ribs 24 comprising a resin superior in shock absorption characteristics to be the shock absorption part can be integrally molded. Therefore, parts constituting the door trim 21 become a single part and the work for an after process is eliminated, thereby reducing the man-power cost and management cost. Further, the die for molding the ribs 24 is needless, and the number of dies can be reduced.

Further, in the above-described door trim 21, when molding, the moving direction of the parting plate 33 can be the same direction as the moving direction of the molding dies 31 and 32, since the moving amount of the parting plate is sufficient by about the width of the door trim 21, a large-scale moving mechanism is not required. Still further, since the resin can be injected by providing gates 34 and 35 only at the molding die 31 side, the molding dies 31 and 32 can be simplified in structure, thereby reducing the cost of the dies.

Yet further, in the above door trim 21, since the parting position 28 between the resin of the main body 22 and the resin of the accessory part 23 provided with the ribs 24 is disposed on the accessory part 23 side of the hinge part 25, characteristics of the resin of the accessory part 23 do not affect the main body 22, and thus the appearance of the main body 22 is not impaired. Yet further, since the parting position 28 does not affect the shape of the ribs 24, the ribs 24 can always be molded in the same shape, and stable energy absorption characteristics can be obtained without dispersion. Therefore, relative positional relations of the main body 22 and the accessory part 23 of different resin types can always be maintained in predetermined conditions.

Therefore, since, in the door trim 21 of the above structure, the main body 22 comprising a resin witch is important for appearance and the accessory part 23 provided with the ribs 24 comprising a resin for providing a predetermined shock absorption performance can be integrally molded, a door trim having a shock absorption function to side impact can be obtained without increasing the manufacturing man-power, manufacturing cost, and mounting space.

### Utilizability in Industry

Since the door trim structure of the invention as claimed in Claim comprises the main body made of the resin to be the door trim exposed to the room inside of the vehicle and the accessory part having one end provided integrally with the main body through a flexible hinge part and the other end engaged with the main body and comprising the resin of different type from the main body, the main body and the accessory part comprising resins of different characteristics can be integrally molded while always maintaining the relative positional relations of each other in the predetermined conditions. As a result, the main body and the accessory part comprising resins of different characteristics can be integrally molded to a door trim without using a large-scale mechanism.

Further, since the accessory part, after being integrally molded with the main body, is folded from the hinge part to a side to be the vehicle room inside of the door trim, and an end is engaged with the main body to form a shock absorption part at the time of side collision of the vehicle, the door trim having a shock absorption function against a side impact can be obtained without increasing the manufacturing man-power, manufacturing cost, and mounting space.

Still further, since the accessory part and the main body are engaged by engaging the claw with the protrusion, and the shock absorption part is formed by the ribs contacting against the main body, the door trim provided with a shock absorption function against a side impact by a simple structure can be obtained.

Yet further, since the parting position of the main body resin and the accessory part resin is disposed on the accessory part side of the hinge part, characteristics of the accessory part resin do not affect the main body, and the appearance of the main body is not impaired.

The molding method of the door trim structure of the invention as claimed in Claim 6 is characterized in that the parting plate is inserted into the molding dies having a molding chamber comprising the main body molding chamber for molding the main body constituting the door trim exposed to the room inside of the vehicle and the accessory part molding chamber connected to the main body molding chamber through a narrow passage part for partitioning the main body molding chamber and the accessory part molding chamber, after one of the main body molding chamber and the accessory part molding chamber is injected with the first resin material, the parting plate is pulled out from the molding dies, the other of the main body molding chamber and the accessory part molding chamber is injected with the second resin material, whereby integrally molding the main body and the accessory part comprising resins of different characteristics while maintaining the relative positional relations of each other always in predetermined conditions without using a complex molding chamber, so that the door trim having the main body and the accessory part comprising resins of different characteristics can be integrally molded by a simple process without using a large-scale mechanism.

The molding method of the door trim structure of the invention as claimed in Claim 7 is characterized in that when molding the door trim structure in which an end of the accessory part having a shock absorption part formed of ribs is molded integrally with the main body through a flexible hinge part, the accessory part is folded from the hinge part to a side to be the vehicle room outside of the door trim and the other end is engaged with the main body through an engaging member to form the door trim structure, the parting plate is inserted into a pair of molding dies having a molding chamber comprising the main body molding chamber for molding the main body and the accessory part molding chamber continued to the main body molding chamber through a narrow passage part for molding the hinge part to partition the main body molding chamber and the accessory part molding chamber, after the first resin material is injected into one of the pair of molding chambers mainly for molding the main body from the first gate provided at one side of the pair of molding dies, the parting plate is pulled out from the molding die, the second resin material is injected into the other of the molding chambers for molding the accessory part provided with ribs from the second gate provided at one side of the pair of molding dies, whereby integrally molding the door trim structure comprising the main body and the accessory part of resins of different characteristics while maintaining the relative positional relations of each other always in predetermined conditions with simplified structures of the molding dies for reducing the molding die costs and without using a complex molding chamber, so that the door trim having the main body and the accessory part comprising resins of different characteristics can be integrally molded by a simple process without using a large-scale mechanism.

Since the engaging member at the main body side is molded by the recess provided at the other side of the pair of molding dies at the position of molding the main body molding chamber, the engaging member at the accessory part side is molded by the recess provided at one side of the pair of molding dies at the position of molding the accessory part molding chamber, the ribs are formed by the recesses provided at the other side of the pair of molding dies at the position of molding the accessory part, and the pull-out amount of the parting plate is set to about the width of the door trim, the structure of the molding dies can be even further simplified, and the door trim can be molded without using a complex mechanism.

## Claims

1. A door trim structure comprising
a resin-made main body (22) forming a door trim exposed to an interior room of a vehicle, and
a resin-made accessory part (23) disposed at the vehicle room outside said main body (22),
wherein said accessory part (23) is molded integrally with the main body (22) and connected thereto through a hinge part (25),
a flexible end of said accessory part (23) being folded from said hinge part (25) to the side to be the vehicle room outside said door trim,
said accessory part (23) forming a shock absorption part (24) for side collision of the vehicle.
**characterised in that**
said accessory part (23) and said main body (22) are molded from different resins,
the parting position between the resin of said main body (22) and that of said accessory part (23) is located on the accessory part side of said hinge part (25), and
the other end of the accessory part (23) engages said main body (22).

2. The structure of Claim 1, including a claw (26) provided on said accessory part (23), and a protrusion (27) provided on said main body (22) and engaging said claw to connect said other end of the accessory part with the main body.

3. The structure of Claim 1, wherein said shock absorption part comprises horizontally extending ribs (24) contacting against said main body (22).

4. A method of molding the door trim structure of any preceding claim wherein
a parting plate (33) is inserted into a pair of molding dies (31, 32), which define a molding chamber (40) comprising a first molding chamber (41) and a second molding chamber (42) connected to said first molding chamber through a narrow passage part (43) for molding said hinge part (25), to partition said first and second molding chambers,
a first resin material is injected from a first gate (34) provided on one side of said pair of molding dies (31, 32) into said first molding chamber (40) for molding mainly said main body (22),
said parting plate (33) is pulled out from said molding dies (31, 32), and
a second resin material is injected from a second gate (35) provided on one side of said pair of molding dies (31, 32) into said second molding chamber (41) for molding said accessory part (23).

5. The method of Claim 4, wherein the engaging member (27) of said main body (22) is molded by a recess (39) provided on the other side of said pair of molding dies (31, 32) at a said first molding chamber (41), the engaging member (26) of said accessory part (23) is molded by a recess (37) provided on the one side of said pair of molding dies at said second molding chamber (42), and said ribs (24) are formed by recesses (38) provided on the other side of said pair of molding dies at said second molding chamber.

6. The method of Claim 4, wherein said parting plate (33) is pulled out by an amount substantially equal to the width of said door trim.

## Patentansprüche

1. Türverkleidungsstruktur umfassend
einen aus Harz hergestellten Hauptkörper (22), der eine im Innenraum eines Fahrzeugs angebrachte Türverkleidung bildet, und
ein aus Harz hergestelltes Zusatzteil (23), das außerhalb des Hauptkörpers (22) am Fahrzeugraum angeordnet ist,
wobei das Zusatzteil (23) einstückig mit dem Hauptkörper (22) geformt und mit diesem über ein Scharnierteil (25) verbunden ist,
wobei das flexible Ende des Zusatzteils (23) vom Scharnierteil (25) zu der Seite des Fahrzeugraums außerhalb der Türverkleidung gefaltet ist, und
wobei das Zusatzteil (23) ein Stoßdämpferteil (24) für seitliche Zusammenstöße des Fahrzeugs bildet,
**gekennzeichnet dadurch, daß**
das Zusatzteil (23) und der Hauptkörper (22) aus verschiedenen Harzen geformt sind,
die Grenzstelle zwischen dem Harz des Hauptkörpers (22) und dem des Zusatzteils (23) vom Scharnierteil (25) aus auf der Seite des Zusatzteils liegt und
das andere Ende des Zusatzteils (23) in den Hauptkörper (22) eingreift.

2. Struktur nach Anspruch 1, enthaltend eine auf dem Zusatzteil (23) vorgesehene Klaue und einem auf dem Hauptkörper (22) vorgesehenen Vorsprung, der mit der Klaue in Eingriff gebracht ist, um das andere Ende des Zusatzteils mit dem Hauptkörper zu verbinden.

3. Struktur nach Anspruch 1, wobei der Stoßdämpferteil waagerecht verlaufende und den Hauptkörper (22) berührende Rippen (24) aufweist.

4. Verfahren zum Formen der Türverkleidungsstruktur nach einem der vorhergehenden Ansprüche, wobei
eine Trennplatte (33) in ein Paar von Gußformen (31, 32) eingefügt ist, die eine Gußkammer (40) definieren, die eine erste Gußkammer (41) und eine mit der ersten Gußkammer durch einen engen Durchgangsabschnitt (43) zum Formen des Scharnierteils (25) verbundene zweite Gußkammer (42) aufweist, so daß die erste und die zweite Gußkammer getrennt sind,
ein erstes Harzmaterial von einem auf einer Seite des Paars der Gußformen (31, 32) vorgesehenen ersten Kanal (34) in die erste Gußkammer (40) hauptsächlich zum Formen des Hauptkörpers (22) eingespritzt wird,
die Trennplatte (33) aus den Gußformen (31, 32) herausgezogen wird, und
ein zweites Harzmaterial von einem auf einer Seite des Paars der Gußformen (31, 32) vorgesehenen zweiten Kanal (35) in die zweite Gußkammer (41) zum Formen des Zusatzteils (23) eingespritzt wird.

5. Verfahren nach Anspruch 4, wobei das Eingriffselement (27) des Hauptkörpers (22) mittels einer auf der anderen Seite des Paars der Gußformen (31, 32) an der ersten Gußkammer (41) vorgesehenen Ausnehmung (39) geformt wird, das Eingriffselement (26) des Zusatzteils (23) durch eine auf der einen Seite des Paars der Gußformen an der zweiten Gußkammer (42) vorgesehene Ausnehmung (37) geformt wird und die Rippen (24) durch auf der anderen Seiten des Paars der Gußformen an der zweiten Gußkammer vorgesehene Ausnehmungen (38) geformt werden.

6. Verfahren nach Anspruch 4, wobei die Trennplatte (33) in einem im wesentlichen der Breite der Türverkleidung entsprechendem Maße herausgezogen wird.

## Revendications

1. Structure d'habillage de portière, comprenant
un corps principal (22) en résine formant un habillage de portière exposé à un habitacle d'un véhicule, et
une partie accessoire (23) en résine, disposée dans l'habitacle du véhicule, à l'extérieur dudit corps principal (22),
ladite partie accessoire (23) étant moulée d'une seule pièce avec le corps principal (22) et reliée à celui-ci par une articulation (25),
une extrémité souple de ladite partie accessoire (23) étant pliée latéralement depuis ladite articulation (25) pour être l'habitacle du véhicule à extérieur dudit habillage de portière,
ladite partie accessoire (23) formant une partie d'amortissement de chocs (24) en cas de collision latérale du véhicule,
**caractérisée en ce que**
ladite partie accessoire (23) et ledit corps principal (22) sont des pièces moulées en résine différentes,
la position de séparation entre la résine dudit corps principal (22) et celle de ladite partie accessoire (23) se trouve du côté partie accessoire de ladite articulation (25), et
l'autre extrémité de la partie accessoire (23) est accouplée avec ledit corps principal (22).

2. Structure selon la revendication 1, comprenant une griffe (26) présente sur ladite partie accessoire (23) et une saillie (27) présente sur ledit corps principal (22) et coopérant avec ladite griffe pour accoupler l'autre extrémité de la partie accessoire avec le corps principal.

3. Structure selon la revendication 1, dans laquelle ladite partie d'amortissement de chocs comporte des nervures horizontales (24) au contact dudit corps principal (22).

4. Procédé de moulage de la structure d'habillage de portière selon l'une quelconque des revendications précédentes, dans lequel
une plaque de séparation (33) est insérée dans une paire de filières de moulage (31, 32), qui définissent une chambre de moulage (40) comportant une première chambre de moulage (41) et une deuxième chambre de moulage (42) reliée à ladite première chambre de moulage par un étroit passage (43) pour mouler ladite articulation (25), afin de séparer lesdites première et deuxième chambres de moulage,
une première résine est injectée depuis une première entrée (34) présente d'un côté de ladite paire de filières de moulage (31, 32) dans ladite première chambre de moulage (40) pour mouler surtout ledit corps principal (22),
ladite plaque de séparation (33) est extraite desdites filières de moulage (31, 32), et
une deuxième résine est injectée depuis une deuxième entrée (35) présente d'un côté de ladite paire de filières de moulage (31, 32) dans ladite deuxième chambre de moulage (41) pour mouler ladite partie accessoire (23).

5. Procédé selon la revendication 4, dans lequel l'élément d'accouplement (27) dudit corps principal (22) est moulé par une empreinte (39) présente de l'autre côté de ladite paire de filières de moulage (31, 32) dans une dite première chambre de moulage (41), l'élément d'accouplement (26) de ladite partie accessoire (23) est moulé par une empreinte (37) présente sur le premier côté de ladite paire de filières de moulage dans ladite deuxième chambre de moulage (42), et lesdites nervures (24) sont formées par des empreintes (38) présentes de l'autre côté de ladite paire de filières de moulage dans ladite deuxième chambre de moulage.

6. Procédé selon la revendication 4, dans lequel ladite plaque de séparation (33) est extraite dans une mesure sensiblement égale à la largeur dudit habillage de portière.
